(19) Europäisches Patentamt
European Patent Office
Office européen des brevets

(11) Publication number: **0 134 849**
**B1**

(12) # EUROPEAN PATENT SPECIFICATION

(45) Date of publication of patent specification: **22.07.87**

(51) Int. Cl.$^4$: **B 01 J 29/06**

(21) Application number: **83304717.8**

(22) Date of filing: **15.08.83**

(54) **Treatment of zeolites.**

(43) Date of publication of application:
**27.03.85 Bulletin 85/13**

(45) Publication of the grant of the patent:
**22.07.87 Bulletin 87/30**

(84) Designated Contracting States:
**BE DE FR GB IT NL SE**

(56) References cited:
**FR-A-2 285 176**
**US-A-3 013 987**
**US-A-3 644 220**
**US-A-3 997 474**
**US-A-4 302 622**
**US-A-4 374 296**

(73) Proprietor: **MOBIL OIL CORPORATION**
**150 East 42nd Street**
**New York New York 10017 (US)**

(72) Inventor: **Chang, Clarence Dayton**
**11 Murray Place**
**Princeton New Jersey 08540 (US)**
Inventor: **Dessau, Ralph Moritz**
**14 Celler Road**
**Edison New Jersey 08817 (US)**
Inventor: **Chu, Cynthia Ting-Wah**
**283 Wescott Boulevard**
**Pennington New Jersey 08534 (US)**
Inventor: **Kerr, George Thomson**
**10 Pin Oak Drive**
**Lawrenceville New Jersey 08648 (US)**
Inventor: **Miale, Joseph Nicolas**
**25 Merritt Drive**
**Lawrenceville New Jersey 08648 (US)**

(74) Representative: **Grundy, Derek George Ritchie et al**
**CARPMAELS & RANSFORD**
**43 Bloomsbury Square**
**London WC1A 2RA (GB)**

**EP 0 134 849 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the treatment of zeolites, particularly highly siliceous zeolites, to enhance their catalystic activity.

Such zeolites are well known in the art and it is generally accepted that their ion exchange capacity is directly dependent on their aluminum content: the more aluminum there is in the crystalline structure, the more cations are required to balance the electronegativity thereof, and when such cations are of the acidic type such as hydrogen, they impart high catalytic activity. Nevertheless, zeolites having little or substantially no aluminum have many important properties and characteristics and a high degree of structural stability and have become candidates for use in various processes including catalytic processes. Materials of this type include zeolites such as ZSM-5 (US—A—3,702,886), ZSM-11 (US—A—3,709,979), and zeolite ZSM-12 (US—A—3,832,449) to mention a few.

The silica-to-alumina mole ratio of a zeolite is often variable; for example, zeolite X can be synthesized with a silica-to-alumina ratio of from 2 to 3; zeolite Y from 3 to about 6. In some zeolites, the upper limit of silica-to-alumina mole ratio is virtually unbounded. Zeolite ZSM-5 is one such material wherein the silica-to-alumina ratio is at least 5. US—A—3,941,871 discloses a zeolite essentially free of aluminum and exhibiting an x-ray diffraction pattern characteristic of ZSM-5. US—A4,061,724, 4,073,865 and 4,104,294 describe microporous crystalline silicas or silicates wherein aluminum is present at impurity level.

Because of their extremely low aluminum content the ion exchange capacity of these zeolites is not as great as that of materials with a higher aluminum content. For instance, the zeolites to be treated in accordance with the invention have ion exchange capacity of less than 0.7 meq/gram whereas zeolite Y exhibits an ion exchange capacity of from about 4.32 to about 7.1 meq/gram. Therefore, when the high silica materials are contacted with an acidic solution and thereafter processed in a conventional manner, they are not as catalytically active as their higher aluminum containing counterparts.

This invention furnishes materials which have all the desirable properties inherently possessed by highly siliceous zeolites yet have a catalytic activity which heretofore has only been manifested by zeolites having a higher aluminum content in their "as synthesized" form. The effect is achieved by introducing elements other than silicon into the zeolite lattice.

US—A—3,354,078 and 3,644,220 disclose treating certain aluminous crystalline aluminosilicates with volatile metal halides.

According to the present invention a method for increasing the ratio of non-silicon to silicon atoms in the framework of a zeolite having an ion exchange capacity less than 0.7 meq/g comprises calcining the zeolite at a temperature of 300 to 900°C, reacting the calcined zeolite at a temperature of 100 to 850°C under anhydrous conditions with a volatile non-silicon compound of an element of Group IIIA, IIIB, IVA, IVB, VB, VIB, VIIB or VIII of the Periodic Table or Be, which compound has a radius ratio below 0.6 and is capable of entering the pores of the zeolite at the reaction temperature, and placing the zeolite thus reacted into the protonated form (i.e. the hydrogen or hydronium form).

To express the matter in slightly different terms, the present invention relates to a method for increasing the total amount of lattice metal in the framework of a porous inorganic crystalline composition comprising 98 mole percent or more $SiO_2$ and 2 mole percent or less oxides of at least one initial lattice metal selected from those of Groups IIIB (e.g. Sc and Y), IVB (e.g. Ti, Zr and Hf), VB (e.g. V), VIB (e.g. Cr), VIIB (e.g. Mn), VIII (e.g. Fe, Co and Rh), IIIA (e.g. B, Al and Ga), and IVA (e.g. Ge) of the Periodic Table of the Elements and having an anhydrous anionic framework molar composition expressed by the formula

$$(1\text{-}x)SiO_2:(x)MO_{n/2}$$

wherein x is less than or equal to 0.02, M is said initial lattice metal and n is the valence of M. The initial lattice metal M may be a combination of metals such as, for example, B and Ga, Co and Al, Co and Cr, Co and Fe, Co and Rh, Fe and Al, Rh and Al, and B and Al. The method comprises contacting said crystalline composition at a temperature of from about 100°C to about 850°C with a volatile compound comprising at least one metal to be coordinated in the framework of said crystalline composition for a time sufficient to increase the total amount of lattice metal in the framework of said crystalline composition whereby said total amount is greater than the amount of said initial lattice metal prior to said contacting, the volatile compound having a radius ratio of less than about 0.6 and a size and shape which will permit it to enter the pores of said crystalline composition at the contacting temperature, including the further step of converting the volatile compound contacted inorganic crystalline composition to the hydrogen or hydronium form.

The silica/non-silica lattice oxide mole ratio is preferably greater than 100, more preferably greater than 500, or as close to infinity as practically possible. Zeolites of silica/alumina mole ratio greater than about 100, or greater than about 500, or up to infinity or as reasonably close to infinity as practically possible are disclosed in the aforementioned US—A—3,941,871, 4,061,724, 4,073,865 and 4,104,294, prepared from reaction solutions which involve no deliberate addition of aluminum. However, trace quantities of aluminum are usually present in the product due to the impurity of the reaction solutions. The invention of course applies to zeolites in which the non-silicon element is other than aluminum, for example boron, iron, chromium, etc.

The starting zeolites for treatment by the present invention have a cation exchange capacity of less

than 0.7 meq/gram, advantageously less than 0.1 meq/gram. An observable total cation exchange capacity of 0 meq/gram will be acceptable. (It is noted that, by way of comparison, the total cation exchange capacity of synthetic faujasite, such as zeolite Y, having a silica/alumina mole ratio of 5.6, on the same basis is about 4.56 meq/gram).

The mechanism of the invention is thus different in kind from ion exchange, does not require the presence of exchangeable cations associated with the starting zeolite, as ion exchange clearly does. A crystalline zeolite structure with negligible ion exchange capacity, i.e. the starting material for the present method, can now be activated or metallated and the activated or metallated crystal shows enhanced exchange capacity, and in the case of an aluminum activated, i.e. aluminum incorporated, material when in the hydrogen form, the resultant crystal shows enhanced catalytic activity for n-hexane cracking as measured by the Alpha Test, hereafter defined.

Ion exchange, i.e. replacement of exchangeable cations of a zeolite with other cations by the methods taught or suggested in U.S. Patents 3,354,078 and 3,644,220, and lattice element incorporation are competing mechanisms when the crystal is contacted with a solution containing potential lattice element ions. This phenomenon, of which the invention takes advantage, determines that as the silica/non-silica lattice oxide mole ratio increases to a high value, ion exchange capacity diminishes and ion exchange subsides in favour of lattice incorporation. This is evident for the examples hereinafter presented.

The size of the volatile compound should be comparable to or smaller than the critical pore dimension of the zeolite in order to enter the pores of the zeolite and assume a location suitable for lattice incorporation. Therefore, it is believed that the volatile compound must have a critical size and shape at the contacting temperature comparable to or less than the critical pore dimension of the crystal at that temperature. The "critical pore dimension" is the pore dimension which would limit sorption of the volatile compound at the contacting temperature. It is the kinetic diameter of a circular pore, and it is about the minor axis size of an elliptical pore. However, it is not inconceivable that a bulky volatile compound reagent may, upon contact with the exterior surface of the crystalline composition, be transformed into smaller species which enter the pores with greater facility. A putative example may be $Al_2Cl_6(gas) \rightarrow 2AlCl_3(sorbate)$.

The novel method of this invention is simple and easy to carry out although the results therefrom are dramatic. It is carried out by subjecting a calcined high silica crystalline material satisfying the above description to contact with a volatile compound having a radius ratio of less than about 0.6, preferably from greater than about 0.1 to less than about 0.6, and a size and shape which would permit it to enter the pores of the high silica crystalline material, at a temperature of from about 100°C to about 850°C, preferably from about 100°C to about 500°C.

Without wishing to be bound by any theory of operation we speculate that the central atom of the volatile compound, e.g. aluminum in aluminum chloride, actually enters the high silica crystalline material framework by coordination, tetrahedral or otherwise, with lattice defects. Central to this hypothesis is the assumed presence of lattice defects or "hydroxyl nests" (R. M. Barrer et al, Can. J. Chem. 42, 1964, p. 1481) which can accommodate the reactant volatile compound central atom.

The volatile compound contacting step may be accomplished by admixture of the volatile compound reagent with an inert gas such as nitrogen or helium at temperatures ranging from about 100°C to about 850°C, preferably from about 100°C to about 500°C. The amount of reagent compound vapor which is utilized is not narrowly critical but usually from about 0.2 to about 2 grams of volatile compound are used per gram of high silica crystalline starting material. In any event, the contacting is conducted in an anhydrous system, e.g. the vapors of the reagent compound are dry.

The term "radius ratio" is defined by L. Pauling in The Nature of the Chemical Bond, Third Edition, Cornell University Press, 1960, Chapter 13, pages 505 et seq, incorporated herein by reference as to definition of radius ratio, for inorganic compounds. The radius ratio for the volatile compound used herein is:

$$\text{radius ratio} = \frac{\text{Crystal ionic radius of the metal atom of the volatile compound}}{\text{Crystal ionic radius of the oxygen anion, } O^{-2}}$$

The metal of the volatile compound must be small enough in ionic state to easily fit into the tetrahedral lattice location. It is believed that a compound having a radius ratio of less than 0.6 will provide the metal in its ionic state in a size which will easily fit.

The crystal ionic radii of elements are listed in the CRC Handbook of Chemistry and Physics, 61st Edition, CRC Press, Inc., 1980, pages F-216 and F-217, said listing incorporated herein by reference. In determining the radius ratio of a particular compound, it is necessary to use crystal ionic radii of the central atom therein (e.g. aluminum in aluminum chloride) and the oxygen anion (e.g. $O^{-2}$) which have been measured by the same method. Non-limiting examples of inorganic compounds satisfying the radius ratio limitation of 0.6, along with their radius ratio in parenthesis, include the following:

| | |
|---|---|
| $AlBr_3$ | (0.386) |
| $AlCl_3$ | (0.386) |
| $BCl_3$ | (0.174) |
| $FeCl_3$ | (0.485) |
| $CrO_2Cl_2$ | (0.394) |
| $TiCl_4$ | (0.515) |
| $SnCl_4$ | (0.538) |
| $GaCl_3$ | (0.470) |

Inorganic compounds not useful in the present method since their radius ratios fail to satisfy the radius ratio limitation of 0.6 include, for example, $UF_6$ (0.606), $SnCl_2$ (0.704), $CrCl_2$ (0.674), $TiCl_2$ (0.712), $SrCl_2$ (0.848) and $CeCl_3$ (0.783).

The compound for use herein will also be one which is volatile within the temperature range of from about 100°C to about 850°C. It will in most cases have a vapor pressure of greater than about 10 mm at a temperature of about 400°C.

Non-limiting examples of compounds satisfying the 0.6 radius ratio and volatility limitations hereof include inorganic halides, e.g. chlorides and bromides, having a central atom selected from the group consisting of $Al^{+3}$, $B^{+6}$, $Be^{+2}$, $Co^{+2}$, $Cr^{+6}$, $Fe^{+3}$, $Ta^{+5}$, $Mn^{+4}$, $Mo^{+6}$, $Sn^{+4}$, $Ti^{+4}$, $V^{+5}$, $W^{+6}$ and $Zr^{+4}$.

The conversion of the volatile compound contacted material to acid form, i.e. hydrogen or hydronium form, may be accomplished in one of several ways. It may be accomplished by contact with an ammonium salt or acid solution followed by calcination at a temperature of from about 200°C to about 600°C in an inert atmosphere of air, nitrogen, etc. at subatmospheric, atmospheric or superatmospheric pressure for from about 1 minute to about 48 hours. The ammonium salt solution and acid solution may be aqueous in concentrations of from about 0.01N to about 1N ammonium salt and from about 0.01N to about 0.5N acid. The contact time will be from about 1 hour to about 20 hours at a temperature of from ambient to about 100°C. The ammonium salt used is not narrowly critical and will normally be an inorganic salt such as ammonium nitrate, ammonium sulfate, ammonium chloride, etc. The acid used will normally be an organic or inorganic acid such as acetic acid, hydrochloric acid, nitric acid, etc.

The conversion of the volatile compound contacted material to acid form may also be accomplished by hydrolysis, such as by contact with water at a temperature of from about 20°C to about 550°C, followed by calcination as above. When the hydrolyzing temperature is below 100°C at atmospheric pressure, liquid water may be used. When the boiling point of water is exceeded, such as when the hydrolyzing temperature exceeds 100°C at atmospheric pressure, the crystalline material may be purged with water saturated gas, e.g. helium. Of course, hydrolysis and aluminum salt solution or acid solution contacting may be conducted simultaneously when the salt or acid solution is aqueous.

The conversion to acid form may also be accomplished if the crystalline material was synthesized with a hydrogen precursor reaction mixture component present, by calcination of the volatile compound contacted material at a temperature of from about 200°C to about 600°C in an inert atmosphere of air, nitrogen, etc. at subatmospheric, atmospheric or superatmospheric pressure for from about 1 minute to about 48 hours.

The invention is applicable to, although not restricted to, zeolites having a constraint index within the range 1 to 12. Of the zeolites advantageously treated in accordance herewith, zeolites ZSM-5, ZSM-11, ZSM-5/ZSM-11 intermediate, ZSM-48, dealuminized ZSM-20, dealuminized zeolite Y and zeolite Beta are particularly noted. ZSM-5 is described in US—A—3,702,886 and US—E—29,948, ZSM-11 in US—A—3,709,979, ZSM-5/ZSM-11 intermediate zeolite in US—A—4,229,424, ZSM-48 in US—A—4,375,573, and zeolite Beta in US—A—3,308,069 and US—E—28,341. Preparing zeolite Beta with a silica/alumina mole ratio above the 100 to 150 maximum specified in US—A—3,308,069 and US—E—28,341 may be accomplished by extraction with acid.

Zeolite Y can be synthesized only in forms which have silica/alumina ratios up to about 5, and in order to achieve higher ratios resort may be made to various techniques to remove structural aluminum so as to obtain a more highly siliceous zeolite. Zeolite ZSM-20 may be directly synthesized with silica/alumina ratios of 7 or higher, typically in the range of 7 to 10, as described in US—A—3,972,983 and 4,021,331.

A number of different methods are known for increasing the structural silica/alumina mole ratio of various zeolites such as ZSM-20, Beta and Y. Many of these methods rely upon the removal of aluminum from the structural framework of the zeolite by chemical agents appropriate to this end. A considerable amount of work on the preparation of aluminum deficient faujasites has been performed and is reviewed in Advances in Chemistry Series No. 121, Molecular Sieves, G. T. Kerr, American Chemical Society, 1973. Specific methods for preparing dealuminized zeolites are described in the following: Catalysis by Zeolites (International Symposium on Zeolites, Lyon, September 9—11, 1980), Elsevier Scientific Publishing Co., Amsterdam, 1980 (dealuminization of zeolite Y with silicon tetrachloride); US—A—3,442,795 and GB—A—1,058,188 (hydrolysis and removal of aluminum by chelation); GB—A—1,061,847 (acid extraction of aluminum); US—A—3,493,519 (aluminum removal by steaming and chelation); US—A—3,591,488 (aluminum removal by steaming); US—A—4,273,753 (dealuminization by silicon halides and oxyhalides); US—A—3,691,099 (aluminum extraction with acid); US—A—4,093,560 (dealuminization by treatment with salts); US—A—3,937,791 (aluminum removal with Cr(III) solutions); US—A—3,506,400 (steaming followed

by chelation); US—A—3,640,681 (extraction of aluminum with acetylacetonate followed by dehydroxylation); US—A—3,836,561 (removal of aluminum with acid); JP—A—53,101,003 (treatment with edta or other materials to remove aluminum) and J. Catalysis 54 295 (1978) (hydrothermal treatment followed by acid extraction).

Highly siliceous forms of zeolite having the structure of zeolite Y may be prepared by steaming or by acid extraction of structural aluminum (or both) but because zeolite Y in its normal, as-synthesized condition, is unstable to acid, it must first be converted to an acid-stable form. Methods for doing this are known and one of the most common forms of acid-resistant zeolite Y is known as "Ultrastable Y" (USY); it is described in US—A—3,293,192 and 3,402,996 and the publication, Society of Chemical Engineering (London) Monograph Molecular Sieves, page 186 (1968) by C. V. McDaniel and P. K. Maher. In general, "ultrastable" refers to Y-type zeolite which is highly resistant to degradation of crystallinity by high temperature and steam treatment and is characterized by a $R_2O$ content (wherein R is Na, K or any other alkali metal ion) of less than 4 weight percent, preferably less than 1 weight percent, and a unit cell size less than 2.45 nm (24.5 Angstroms) and a silica/alumina mole ratio in the range of 3.5 to 7 or higher. The ultrastable form of Y-type zeolite is obtained primarily by a substantial reduction of the alkali metal ions and the unit cell size. The ultrastable zeolite is identified both by the smaller unit cell and the low alkali metal content in the crystal structure.

Other specific methods for increasing the silica/alumina mole ratio of zeolite Y by acid extraction are described in US—A—4,218,307, 3,591,488 and 3,691,099.

Zeolite ZSM-20 may be converted to more highly siliceous forms by a process similar to that used for zeolite Y. First, the zeolite may be converted to an "ultrastable" form which is then dealuminized by acid extraction. The conversion to the ultrastable form may suitably be carried out by the same sequence of steps used for preparing ultrastable Y. The zeolite is successively base-exchanged to the ammonium form and calcined, normally at temperatures above 700°C. The calcination should be carried out in a deep bed in order to impede removal of gaseous products. Acid extraction of the "ultrastable" ZSM-20 may be effected in the same way as mentioned above for zeolite Beta.

The zeolites prepared by the present invention are activity-enhanced and, therefore, useful as catalyst components for a variety of organic, e.g. hydrocarbon, compound conversion processes. Such conversion processes include, as non-limiting examples, cracking hydrocarbons with reaction conditions including a temperature of from about 300°C to about 700°C, a pressure of from about 0.1 atmosphere (bar) to about 30 atmospheres and a weight hourly space velocity of from about 0.1 to about 20; dehydrogenation hydrocarbon compounds with reaction conditions including a temperature of from about 300°C to about 700°C, a pressure of from about 0.1 atmosphere to about 10 atmospheres and a weight hourly space velocity of from about 0.1 to about 20; converting paraffins to aromatics with reaction conditions including a temperature of from about 100°C to about 700°C, a pressure of from about 0.1 atmosphere to about 60 atmospheres, a weight hourly space velocity of from about 0.5 to about 400 and a hydrogen/hydrocarbon mole ratio of from about 0 to about 20; converting olefins to aromatics, e.g. benzene, toluene and xylenes, with reaction conditions including a temperature of from about 100°C to about 700°C, a pressure of from about 0.1 atmosphere to about 60 atmospheres, a weight hourly space velocity of from about 0.5 to about 400 and a hydrogen/hydrocarbon mole ratio of from about 0 to about 20; converting alcohols, e.g. methanol, or ethers, e.g. dimethylether, or mixtures thereof to hydrocarbons including aromatics with reaction conditions including a temperature of from about 275°C to about 600°C, a pressure of from about 0.5 atmosphere to about 50 atmospheres and a liquid hourly space velocity of from about 0.5 to about 100; isomerizing xylene feedstock components with reaction conditions including a temperature of from about 230°C to about 510°C, a pressure of from about 3 atmospheres to about 35 atmospheres, a weight hourly space velocity of from about 0.1 to about 200 and a hydrogen/hydrocarbon mole ratio of from about 0 to about 100; disproportionating toluene with reaction conditions including a temperature of from about 200°C to about 760°C, a pressure of from about atmospheric to about 60 atmospheres and a weight hourly space velocity of from about 0.08 to about 20; alkylating aromatic hydrocarbons, e.g. benzene and alkylbenzenes, in the presence of an alkylating agent, e.g. olefins, formaldehyde, alkyl halides and alcohols, with reaction conditions including a temperature of from about 340°C to about 500°C, a pressure of from about atmospheric to about 200 atmospheres, a weight hourly space velocity of from about 2 to about 2000 and an aromatic hydrocarbon/alkylating agent mole ratio of from about 1/1 to about 20/1; and transalkylating aromatic hydrocarbons in the presence of polyalkylaromatic hydrocarbons with reaction conditions including a temperature of from about 340°C to about 500°C, a pressure of from about atmospheric to about 200 atmospheres, a weight hourly space velocity of from about 10 to about 1000 and an aromatic hydrocarbon/polyalkylaromatic hydrocarbon mole ratio of from about 1/1 to about 16/1.

It may be useful to composite the above-described activity-enhanced zeolite with a matrix comprising a material resistant to the temperature and other conditions employed in conversion processes, for instance matrices such as described in our EP—A—1695.

The following examples illustrate the invention.

### Example 1

ZSM-5 having a silica/alumina mole ratio of about 26,000:1 was treated with 1N $NH_4NO_3$, washed with water, treated with 0.5N $HNO_3$, washed with water again and calcined in air for 30 minutes at 538°C. The

product was a NHazSM-5 comprising 92 ppm bulk alumina and 210 ppm sodium, having a total cation exchange capacity, evaluated in terms of ammonia desorption in meq N/gram of material by way of thermogravimetric analysis, of less than 0.008 meq/gram.

A 5.5 gram sample of this product was placed in the center of a 1.8 cm I.D. × 25 cm vycor tube. One end of the tube was filled with anhydrous inorganic halide (about 3.5 grams of $AlCl_3$) having a radius ratio of 0.386. A 4-way stop-cock was used to direct a helium flow to either end, through the tube and to vent. A pipe furnace long enough to cover 2/3 of the tube length was used as a heat source. The crystalline material was heated to 375°C with He flow through the inorganic halide, unused inorganic halide collecting on the cold downstream end. The critical size and shape of the anhydrous $AlCl_3$ at 375°C is such that it enters the pores of the zeolite at that temperature. The flow was reversed after 1 hour and the furnace was moved to cover the condensed inorganic halide. Cold air was used to chill the downstream end. The system was subjected to 12 hourly flow changes or cycles. At the end of every third cycle, the temperature was raised to 550°C for 30 minutes. The product was exchanged twice with 1N $NH_4NO_3$ and calcined overnight in air at 538°C.

## Example 2

A 0.5 gram quantity of the HNa-ZSM-5 from Example 1 was exchanged twice with 1N $NH_4NO_3$ and calcined in air for 16 hours at 538°C.

The ammonium exchanged material from Example 2 and fully treated material from Example 1 were examined for total cation exchange capacity and catalytic activity. These values were also determined for the HNa-ZSM-5 of Example 1 for comparison purposes. The exchange capacity was evaluated in terms of ammonia desorption in meqN/gram of material by way of thermogravimetric analysis. The catalytic activity was evaluated in terms of Alpha Value which is an approximate indication of the catalytic cracking activity of the catalyst compared to a standard catalyst and is described in The Journal of Catalysis, Vol. IV, pp, 522—529 (August 1965). The results of these examinations are listed below. The improvement by way of the present method is evident, showing activation of a material having no appreciable cation exchangeability. The observed increase in exchange capacity for the material treated by the present method is evidence of aluminum incorporation. The substantial enhancement in Alpha activity suggests that the aluminum of the inorganic halide has entered the crystalline material framework as tetrahedral aluminum.

| Crystalline material | NaHzSM-5 | Example 1 | Example 2 |
|---|---|---|---|
| Cation exchange capacity, meq/gram | less than 0.008 | 0.0564 | less than 0.008 |
| Alpha value | about 0.1 | 100 | about 0.15 |
| $SiO_2/Al_2O_3$, molar | 26,000 | less than 590 (estimated) | 26,000 |

## Example 3

(A) ZSM-5 having a silica-to-alumina mole ratio of about 26,000:1 (65 ppm framework alumina, 110 ppm bulk alumina and 0.23 percent sodium) was calcined in air for 30 minutes at 538°C. This material had a total cation exchange capacity of virtually 0 meq/gram.

(B) ZSM-5 having a silica-to-alumina mole ratio of about 600:1 was calcined for 30 minutes in air at 538°C. This material had a total cation exchange capacity of 0.055 meq/gram.

A vycor tube was loaded with 2 grams anhydrous $AlBr_3$ having a radius ratio of 0.386 and 4 grams of the product of (A), separating the components with a thin plug of vycor wool. A stream of helium (about 100 ml/minute) was passed through the $AlBr_3$ and then through the crystalline material. The temperature was increased to 100°C for one hour and then at 5°C/minute to 370°C. The reactor tube was tilted about 30 degrees to retain any liquid $AlBr_3$ near the inlet. After 30 minutes at 370°C, the reactor tube was removed, cooled, and sealed at room temperature overnight. The reactor tube was again heated with the helium flow to 500°C for one hour. The critical size and shape of the anhydrous $AlBr_3$ at 370°C is such that it enters the pores of the zeolite at that temperature.

A first aliquot of the product zeolite was hydrolyzed by treating with water at room temperature three times for 45 minutes each. The resulting hydrolyzed crystalline material was calcined in flowing air for 30 minutes at 538°C.

A second aliquot of the product zeolite was hydrolyzed by purging at 200—550°C with water saturated helium (45—50°C, 80—90 mm $H_2O$) and then calcined in flowing air for 30 minutes at 538°C.

A third aliquot of the product zeolite was base-exchanged with an aqueous solution of 1N $NH_4NO_3$ (3-exchanges followed by hot water washing). The resulting exchanged material was calcined for 30 minutes at 538°C in flowing air.

The products of Example 3 were evaluated for catalytic activity by the Alpha Test. The results of these tests are below:

| Products of Example 3 | Alpha Value |
|---|---|
| (A) (basis) | 0.015 |
| First aliquot | 50 |
| Second aliquot | 29 |
| Third aliquot | 71 |

Example 4

A first aliquot of the product of Example 3 (B) was treated with anhydrous $AlBr_3$ as in Example 3 except that nitrogen was used instead of helium and the temperature was maintained at 130°C for overnight. The resulting crystalline material was calcined in air at 538°C overnight and then base-exchanged with 1N $NH_4NO_3$ aqueous solution. The exchanged material was then calcined for 30 minutes at 538°C in flowing air.

A second aliquot of the product of Example 3 (B) was calcined overnight in air at 538°C, then base-exchanged with an aqueous solution of 1N $NH_4NO_3$, and then calcined for 30 minutes at 538°C in flowing air. It was not contacted with aluminum bromide.

The product zeolites of Example 4 were evaluated for catalytic activity as in Example 3 and for structural aluminum and silicon contents. The results are listed below:

| | Products of Example 4 | |
|---|---|---|
| | First aliquot | Second aliquot |
| Alpha value | 15 | 10 |
| Aluminum content, % wt. | 1.25 | 0.16 |
| Silicon content, % wt. | 46.45 | 46.77 |

Example 5

In order to demonstrate relative importance of converting the inorganic halide contacted material to the hydrogen or hydronium form, a 3 gram aliquot of the ZSM-5 prepared in Example 3 (A) was placed in one side of a glass reactor and 1.5 grams of anhydrous $AlCl_3$ in the other. The materials were flushed at 100°C with helium flowing at 50 ml/minute. The aluminum chloride was carried through the bed of ZSM-5 while heating to 200° at about 2°C per minute, to 500°C at about 5°C per minute and maintaining the reactor at 500°C for 30 minutes. The zeolite was placed in a clean reactor and flushed with helium at 500°C for 30 minutes to remove any unreacted aluminum chloride. Half the product was then hydrolyzed by standing in 100 ml water at room temperature for two hours. It was then decanted and dried overnight at 130°C. Both halves were then calcined in air at 538°C for 30 minutes. Both the hydrolyzed and unhydrolyzed halves were tested for n-hexane cracking by the Alpha Test. The results of these tests are listed below with results of the same tests for the ZSM-5 treated in accordance herewith, i.e. Example 3, for comparison. The improvement is evident.

| Crystalline product of Example Number | Alpha Value |
|---|---|
| 3 (A) (basis) | 0.015 |
| 3 Third aliquot | 71 |
| 5 (unhydrolyzed) | 0.6 |
| 5 (hydrolyzed) | 32 |

Example 6

A dealuminized zeolite Y having a silica/alumina mole ratio of 278 was prepared from $NH_4NaY$ with a silica-to-alumina mole ratio of 5 by a series of $NH_4^+$ exchange/calcinations followed by a series of acid extractions with increasing acid strength. The dealuminized zeolite Y exhibited negligible total cation exchange capacity (i.e. about 0 meq/gram), and an Alpha Value of between 0.4 and 0.7. An aliquot of the dealuminized zeolite Y was treated as in Example 1 (aluminum chloride being the volatile compound) and tested for exchange capacity and Alpha Value as in that Example. The final material had a total cation exchange capacity of 0.575 meq/gram and an Alpha Value of 18.

The observed increase in exchange capacity for the dealuminized Y is evidence of metal, i.e. aluminum,

incorporation by the present method. Again, the substantial enhancement in Alpha activity suggests that the metal has entered the zeolite framework, in this instance as tetrahedral aluminum.

In the treatment of dealuminized zeolite Y, the activity enhancement is relatively lower than for zeolite ZSM-5. This is believed explained in light of the Kerr mechanism (G. T. Kerr ACS Adv. Chem. Ser. No. 121, 1974, p. 219) for ultrastabilization of dealuminized Y. According to this mechanism, the vacancies generated by aluminum removal from faujasites tend to "heal" by incorporation of extra-framework $Si(OH)_4$. Defect sites available for tetrahedral coordination will therefore be limited in dealuminized Y. Therefore, it may be inferred from the large enhancement in exchange capacity observed in Example 6 that a significant fraction of the aluminum added by way of the volatile compound is incompletely coordinated in the lattice, or possibly present as occluded silica-alumina in the dealuminized zeolite Y. This is consistent with the hypothesis that lattice defects are implicated in the present method for activity enhancement of high silica crystalline materials having negligible cation exchange capacity with inorganic halides.

Example 7

Zeolite Beta having a silica/alumina mole ratio of 176 and a cation exchange capacity of about 0.19 meq/gram is calcined for 30 minutes at 538°C. A 3 gram aliquot is placed in one half of a vycor reactor and 2 grams of ferric chloride (radius ratio of 0.485) in the other. The system is heated slowly at about 2°C per minute to 550°C. Ferric chloride has a size and shape at 550°C such that it enters the pores of zeolite Beta. The reactor is tipped about 15°C from the horizontal so that flowing helium (100 ml/min) is passed through the molten or boiling ferric chloride, and then through the zeolite bed. The crystalline zeolite Beta is then purged at 550°C for 30 minutes and cooled. It is then exchanged with 1N $NH_4NO_3$, calcined in air at 538°C for 16 hours, and tested for catalytic activity along with the untreated zeolite Beta in the Alpha test. The results of this test are below:

| Crystalline material | Alpha Value |
|---|---|
| Untreated zeolite Beta used in Example 7 | 68 |
| Treated zeolite Beta of Example 7 | Est. 85 |

Example 8

A crystalline "borosilicate" having the structure of zeolite Beta and a silica/alumina mole ratio of 145, a silica/boria mole ratio of 29.6 and a cation exchange capacity of approximately 0.23 meq/gram was tested in the Alpha Test and found to have an Alpha Value of 33. An aliquot of this crystalline material is treated by the present method as in Example 7, except that the ferric chloride is replaced with aluminum chloride having a radius ratio of 0.386 and a size and shape which permits its entrance into the pores of the crystalline borosilicate at the temperature of 550°C. The aluminum chloride contacted crystalline material is then exchanged with 1N $NH_4NO_3$, calcined as in Example 7 and tested for catalytic activity in the Alpha Test. The treated material exhibits an Alpha Value of about 300.

Example 9

A crystalline "ferrosilicate" having the structure of zeolite ZSM-5 with 1.21 wt.% $Fe_2O_3$, 105 ppm $Al_2O_3$, the balance $SiO_2$, was determined to contain approximately 24% of the Fe in framework position by ammonia sorption and temperature programmed desorption. The cation exchange capacity of this crystalline material was less than 0.7 meq/gram. An aliquot of this material was tested in the Alpha Test and found to have an Alpha Value of 1.1. A further aliquot of this material is treated as in Example 8 with aluminum chloride. The aluminum chloride contacted crystalline material is then exchanged and calcined as in Example 8 and tested for catalytic activity in the Alpha Test. The treated material exhibits an Alpha Value of about 30.

Example 10

Three samples of zeolite ZSM-5, having silica-to-alumina ratios of 600, 2900 and greater than 50,000 respectively, and one sample of ZSM-11 having a silica-to-alumina ratio of about 1,056 were calcined in either air or nitrogen at 1°C per minute to about 540°C where the temperature was maintained for about 10 hours. Two grams of each of the calcined zeolites were placed in a horizontal tube on one side of a fritted disc and one gram of aluminum chloride was placed on the other side. Dry nitrogen at 50—100 cc per minute was introduced from the direction of the zeolite while heating at 100°C for one hour. The direction of the nitrogen flow as then reversed and the temperature raised to 500°C at 2°C per minute and maintained at 500°C for ½ hour. After cooling, the zeolite was transferred to another reactor and again heated to 500°C in nitrogen to remove any residual unreacted aluminum chloride.

Each of the four zeolites was then hydrolyzed at 100 ml of water at room temperature for at least two hours. The hydrolyzed samples were filtered, washed well with water, air-dried, and then finally calcined at 540°C for ten hours.

The results obtained, as well as the properties of the aluminum enhanced zeolites are shown in the following table:

TABLE
Properties of aluminum-enhanced zeolites

| Zeolite type | ZSM-5 | ZSM-5 | ZSM-5 | ZSM-11 |
|---|---|---|---|---|
| $Si/Al_2$ | 600 | 2900 | 50,000 | 1056 |
| % Al (orig.) | 0.15% | 0.03% | 0.01% | 0.1% |
| % Al (after treatment) | 2.55% | 1.63% | 1.55% | 1.93% |
| % Crystallinity (after treatment) | n.d. | n.d. | 74% | n.d. |
| Alpha (orig. in H-form) | 17 (est.) | 4 (est.) | 0.004 | 10 (est.) |
| Alpha (after treatment) | 102 | 75 | 70 | 101 |
| Increase in Alpha | 85 | 71 | 70 | 91 |
| Constraint Index (after treatment) | n.d. | n.d. | 4.1 | 4.8 |

As can be seen, the alpha value of each of the four zeolites was considerably raised. Furthermore, this enhanced acid activity was clearly intrazeolitic as evidenced by the shape selective constraint index values.

Example 11

A six gram quantity of zeolite ZSM-48 having a silica-to-alumina mole ratio of 870 was calcined at 538°C for one hour with helium flow and for four hours in air and divided into a 4.5 g portion and a 1.5 g portion.

The 4.5 gram portion of the calcined zeolite was reacted with 50 ml of 1 percent (0.5N) hydrogen fluoride solution for ten minutes at 20°C and then water washed with cold water. The hydrogen fluoride reacted zeolite was dried at about 130°C and then contacted with 1N aqueous solution of $NH_4NO_3$ (no aluminum chloride contacting) for 4 hours at 80°C and calcined at 538°C in air for 60 minutes.

The 1.5 gram portion of the calcined zeolite was reacted with 50 ml of 1 percent (0.5N) hydrogen fluoride solution for ten minutes at 20°C and then water washed with cold water. The hydrogen fluoride reacted zeolite was dried at about 130°C and loaded into a glass tube with 3 grams of anhydrous aluminum chloride on the upstream end. The tube was heated slowly (about 2°C per minute) from 100°C to 550°C with helium flowing at about 20 ml/minute. This caused aluminum chloride vapor to pass through the zeolite for about 240 minutes. The aluminum chloride contacted zeolite was removed from the tube, dried at about 130°C, treated with 1N $NH_4NO_3$ and calcined as for the 4.5 g portion.

The calcined products were subjected to the Alpha Test to measure catalytic activity. The results of this test are listed below:

| Product of Example | Treatment + Calcination | Alpha Value |
|---|---|---|
| 4.5 g portion | $HF+NH_4NO_3$ | 4.4 |
| 1.5 g portion | $HF+AlCl_3+NH_4NO_3$ | 13 |

Example 12

A sample of zeolite ZSM-48 having a silica-to-alumina mole ratio of 180 was calcined at 538°C for one hour with helium flow and for 4 hours in air.

Example 12(a)

An aliquot of the zeolite product of Example 12 was contacted with 1N $NH_4NO_3$ for 18 hours at 20°C (no hydrogen fluoride or aluminum chloride treatment) and then calcined as in Example 12.

Example 12(b)

Another aliquot of the Example 12 zeolite product was contacted with aluminum chloride vapor as in Example 11 (no hydrogen fluoride treatment), dried at about 130°C, treated with 1N $NH_4NO_3$ and calcined as in Example 11.

Example 12(c)

A quantity of the product of Example 12(b) was reacted with 40 ml of 1 percent (0.5N) hydrogen fluoride solution for ten minutes at 20°C and then washed with cold water. It was then treated with 1N $NH_4NO_3$ as in Example 11 (no aluminum chloride treatment subsequent to hydrogen fluoride treatment), washed, dried and calcined for 30 minutes at 538°C in air.

Example 12(d)

A quantity of product of Example 12(b) was treated with hydrogen fluoride as in Example 8 and washed with water. It was then, however, contacted with aluminum chloride, contacted with $NH_4NO_3$ and calcined as in Example 11.

Quantities of the final products were subjected to the Alpha Test. The results of this test are listed below.

| Product Example | Treatment +Calcination | Alpha Value |
|---|---|---|
| 12 | (base) | less than 1 |
| 12(a) | $NH_4NO_3$ | 31 |
| 12(b) | $AlCl_3+NH_4NO_3$ | 20 |
| 12(c) | Ex.7+HF+$NH_4NO_3$ | 28 |
| 12(d) | Ex.7+HF+$AlCl_3+NH_4NO_3$ | 65 |

Example 13

Samples of ZSM-5 of silica/alumina ratio 50,000, 26,000 and 1056, respectively, were treated in accordance with the present invention by calcining same at 540°C in air for 2 hours and contacting the calcined zeolite with gallium chloride vapor in flowing nitrogen at 200°C for 2 hours. The gallium chloride vapor contacted contacted zeolite, in each case, was further subjected to heating at 500°C in nitrogen for 1 hour, hydrolyzing the heated zeolite in water at room temperature (20°C) and then calcining the hydrolyzed zeolite at 500°C in air for about 8 hours. The gallium contents of the products were (% wt.) 3.5, 4.1 and 4.2 respectively. These amounts of incorporated gallium are far greater than would be anticipated from simple ion-exchange based on original aluminum content of the zeolites used.

Portions of the products and of the acid form of the starting materials were evaluated for acid activity by the Alpha Test. Extensive activity enhancement was observed as shown in the Table below:

| Zeolite | 50,000 | 26,000 | 1056 (ZSM-11) |
|---|---|---|---|
| Alpha Value, acid form but untreated | less than 0.2 | less than 0.2 | less than 10 (est.) |
| Alpha Value, treated After 5 minutes | — | 131 | — |
| After 20 minutes | 101 | 84 | 62 |
| After 60 minutes | 50 | — | 35 |
| After 120 minutes | 35 | — | 25 |
| After 130 minutes | — | 32 | — |

Example 14

After regeneration by calcination in air for 60 minutes at 538°C, the 26,000 silica/alumina ZSM-5 tested above was reevaluated by the Alpha Test. The regenerated material exhibited an Alpha Value of 131 after 5 minutes, 89 after 21 minutes and 53 after 68 minutes.

It is observed from the results of Examples 13 and 14 that the ultra high silica-containing zeolite materials treated by the present invention exhibit vastly enhanced acidic cracking activity. It is also noted here that during the above Alpha Testing, the activity enhanced materials provided by the present invention demonstrated dehydrogenative activity, uncharacteristic of a non-gallium-containing, lower silica/alumina zeolite, as indicated by high yields of benzene formed under the Alpha Test conditions where selectivity for benzene remained constant throughout the tests at greater than about 20 percent.

To demonstrate the observed dehydrogenative activity more fully, the following two experiments were conducted:

Example 15

A mixture feed of 50 percent 1,2-dimethylcyclohexane and 50 percent 1,4-dimethylcyclohexane was contacted with the activated zeolite of 50,000 silica/alumina ratio of Example 13 at conversion conditions including atmospheric pressure, 538°C and 2 WHSV. Conversion of 25 weight percent was achieved. A product profile for this example demonstrating the shape-selective dehydrogenative activity of the ultra high silica-containing zeolite treated by the present invention is presented below:

| Products, wt.% | |
|---|---|
| Benzene | 1.5 |
| Toluene | 4.6 |
| Ethylbenzene | 2.1 |
| p-Xylene | 5.6 |
| m-Xylene | 4.5 |
| o-Xylene | 3.4 |

The preferential dehydrogenation of 1,4-dimethylcyclohexane (50% converted) relative to the 1,2-isomer (4% converted) confirms the intra-zeolitic structure position of the gallium by way of the present invention.

Example 16

A feed of ethylcyclohexane was contacted with the zeolite used in Example 15 at conversion conditions including atmospheric pressure, 538°C and 2 WHSV. Conversion of 40 weight percent was achieved. A product profile for this example demonstrating the shape-selective dehydrogenative activity of the ultra high silica-containing zeolite treated by the present invention is presented below:

| Products, wt.% | |
|---|---|
| Benzene | 4.3 |
| Toluene | 4.9 |
| Ethylbenzene | 8.7 |
| p-Xylene | 8.0 |
| m-Xylene | 5.5 |
| o-Xylene | 2.0 |

The preferential formation of p-xylene isomer (52% of xylenes formed) from ethylcyclohexane again confirms the structural position of the gallium in the zeolite treated hereby.

Example 17

The conversion of paraffins, e.g. propane, to aromatics was also accomplished over the treated 26,000 silica/alumina ratio of Example 13 at conversion conditions including 540°C, 0.6 WHSV and atmospheric pressure. A conversion of 40 weight percent propane yielded $C_6$—$C_8$ aromatics with 45 weight percent selectivity. The conversion of n-hexane to aromatics was also conducted over the same catalyst at conversion conditions including 538°C, and 200.2 mbar (150 mm) n-hexane in nitrogen. At greater than 95% conversion of n-hexane, the $C_{10}^-$ aromatics yield showed greater than 50 weight percent selectivity, with benzene predominating.

Example 18

The conversion of propylene to paraffins and aromatics was conducted over the catalyst of Example 17 at conversion conditions including 450°C, atmospheric pressure and a weight hourly space velocity of 25. Conversion of 50% resulted with the product being composed of $C_1$—$C_{10}$ paraffins and aromatic hydrocarbons.

Example 19

Dimethylether (DME) was converted to hydrocarbon compounds over the treated zeolite ZSM-11 of Example 13 at conversion conditions including 450°C, atmospheric pressure and 8 WHSV. The DME was 100% converted to a $C_1$—$C_{10}$ paraffin, olefin and aromatic product including 11.4 weight percent ethylene, 4.0 weight percent toluene, 9.4 weight percent $C_8$ and 8.2 weight percent $C_9$ aromatics.

Example 20

A quantity of the 26,000 silica/alumina ratio ZSM-5 zeolite of Example 13, having been calcined, and a quantity of the same zeolite after its gallium treatment in that Example were subjected to ion exchange by contacting each with 1M $NH_4Cl$ and adjusting the pH of each contacting solution to 9 with addition of $NH_4OH$. The solutions were each stirred overnight at room temperature (about 20°C). Both ion exchanged zeolites were then separated from solution in the normal way and tested for ion exchange capacity. That capacity for the Example 13 zeolite before gallium treatment was less than 0.01 meq N/gram. The ion exchange capacity for the Example 13 zeolite after gallium treatment was 0.5 meq N/gram. The increase in ion exchange capacity of the treated zeolite in comparison with the untreated zeolite demonstrates the structural disposition of the gallium.

Example 21

Zeolite ZSM-5 having a silica-to-alumina mole ratio of 50,000 was calcined at 538°C for 8 hours. After cooling, anhydrous ferric chloride ($FeCl_3$) vapors in a nitrogen stream were passed over the zeolite, while the temperature was programmed from room temperature to 300°C at a rate of 2—3°C/minute, where it was held for 1 hour. The temperature was then raised to 500°C, where it was maintained for an hour. The iron-containing compound contacted material was cooled to about room temperature and was then slurried in water at room temperature for 15 minutes. The filtered and washed resulting zeolite was then calcined in air at 538°C for 8 hours. The yellow-brown product analyzed 4.9 weight percent iron.

Example 22

Zeolite ZSM-5 having a silica-to-alumina mole ratio of 26,000 was subjected to calcination and contacted with anhydrous ferric chloride, as in Example 21. The cooled iron-containing compound contacted material was then slurried in water at room temperature for 17 hours. The filtered and washed resulting zeolite was then calcined in air at 538°C for 8 hours. The final product contained 2.8 weight percent iron.

A quantity of the product was subjected to ammonium exchange by slurring it in 25 ml 1M aqueous $NH_4Cl$ solution containing 2 ml $NH_4OH$ for 17 hours at room temperature. The ammonium content of the ion-exchanged material was greater than 0.11 meq/gram, indicating significant ammonium exchange. As a basis for comparison, the starting material of this Example was subjected to the same ammonium exchange procedure as above and no significant ammonium exchange was observed; the ammonium content was less than 0.01 meq/gram. This is evidence of structural location of iron introduced by the present method.

Example 23

To demonstrate shape-selective dehydrogenation of isomeric ethyltoluenes over the zeolite, an equimolar mixture of para- and ortho-ethylenetoluene was reacted over the material prepared in Example 22 at 575°C and a weight hourly space velocity of 0.25 $hr^{-1}$. A mixture of isomeric methylstyrenes was obtained including the meta-isomer. The residual ethyltoluenes were predominantly the orthoisomer, indicating preferential conversion of the para-isomer.

Example 24

ZSM-5 with a a silica-to-alumina mole ratio of about 26,000 was calcined in air at 538°C for 10 hours. Vapors of chromyl chloride ($CrO_2Cl_2$) in nitrogen were then passed through the dried zeolite at 75°C for a period of 100 minutes. The product was then heated to 500°C at 5°C/minute and held at 500°C for an additional hour. After cooling, the zeolite was slurried in water at room temperature for one hour after which it was filtered, washed well with water, and dried, prior to final calcination at 538°C for 10 hours. The calcined material was green in color and contained 1.2 weight percent chromium.

Example 25

(a) Hydrocarbon Reforming

Aromatization of n-hexane and n-octane was accomplished over the catalyst of Example 24 at 550°C. At 30 weight percent conversion, n-hexane yielded benzene with a selectivity of 60 weight percent, while n-octane produced a mixture of aromatics (mainly ethylbenzene and o-xylene) with similar selectivity.

(b) Shape-selective Dehydrogenation of Dimethylcyclohexanes

An equimolar mixture of cis-1,2-dimethyl and trans-1,4-dimethyl cyclohexanes was passed over the catalyst of Example 24 at 550°C. At low conversions, the selectivity for p-xylene formation relative to that of o-xylene was 5:1.

(c) Dehydrogenation of Ethylbenzene

When ethylbenzene was reacted over the catalyst of Example 24 at 550°C, styrene was formed with a selectivity of 92 weight percent at 34 weight percent ethylbenzene conversion.

(d) Shape-selective Dehydrogenation of Ethyltoluenes

An equimolar mixture of para- and ortho-ethyltoluene was passed over the catalyst of Example 24 at 575°C and a weight hourly space velocity of 0.25 $hr^{-1}$. The effluent contained 27—30 weight percent para-methylstyrene with less than 5 weight percent ortho-methylstyrene, indicative of highly selective conversion of the para isomer. Only slight catalyst aging was observed over a period of 5 hours.

Example 26

Zeolite ZSM-5 having a silica-to-alumina mole ratio of 3400 was calcined and treated with chromyl chloride as in Example 24. The chromyl chloride contacted ZSM-5 was not subjected to water treatment, however. The final catalyst material contained 2.3 weight percent chromium by analysis.

Example 27

A portion of the catalyst material prepared in Example 26 was slurried in water for 1 hour at room temperature and then calcined as in Example 24. This material contained 1.4 weight percent chromium by analysis.

Example 28

A quantity of the catalyst material prepared in Example 27 was slurried in 0.01M KOH solution for 1 hour at room temperature to further tailor catalytic activity by reducing acidity therein. The resulting solid material was filtered and dried at 95°C and analyzed. It contained 1.48 weight percent chromium.

Example 29

(a) Naphtha feeding

A wide range $C_6$—360°F naphtha with research octanenumber clear of 49 was contacted with the catalyst material prepared in Example 24 at 590°C and a weight hourly space velocity of 0.3 $hr^{-1}$. The liquid product recovered at about 50 weight percent yield had a research octane number clear of 82.4.

(b) Naphtha reforming

The experiment of Example 29(a) was repeated using, instead, the catalyst material of Example 26. The liquid product had a research octane number clear of 81.8.

(c) Shape-selective Dehydrogenation of Isomeric Ethyltoluenes

An equimolar mixture of para- and ortho-ethyltoluenes was reacted over the catlayst material of Example 26 at 575°C and a weight hourly space velocity of 0.25 $hr^{-1}$. Thirty percent conversion to methylstyrenes was observed, with the ratio of para- to ortho-methylstyrene of 4:1, indicative of preferential conversion of the para-isomer.

(d) Shape-selective Dehydrogenation of Isomeric Ethyltoluenes

An equimolar mixture of para- and meta-ethyltoluenes was passed over the catalyst of Example 26 at 575°C.

At 25 percent conversion to methylstyrene, the ratio of para- to meta-methylstyrene was 3:1, indicative of preferential conversion of the para-ethyltoluene. The experiment was repeated using, instead, a catalyst of $Cr_2O_3$ on alumina. The para- to meta-methylstyrene ratio in the product was less than 1.1.

(e) Shape-selective Dehydrogenation of Isomeric Ethyltoluenes

The experiment (d) was repeated using, instead, the catalyst material prepared in Example 28. At approximately 30 percent conversion to methylstyrenes, the ratio of para- to meta-methylstyrene was 3:1, indicative of preferential conversion of the para-isomer.

(f) Activity tailoring by base treatment

The catalyst materials of Examples 27 and 28 were compared for relative activity in dehydrogenation of paraethyltoluene at 575°C and a weight hourly space velocity of 0.25 $hr^{-1}$. Over the Example 27 catalyst material at 40.2 weight percent para-methylstyrene production, 7.1 weight percent meta-methylstyrene and 7.8 weight percent toluene were produced. Over the further activity tailored Example 28 catalyst material at 38.3 weight percent para-methylstyrene production, only 0.7 weight percent meta-methylstyrene and 2.5 weight percent toluene were produced.

(1 atmosphere × 1.013 = 1 bar).

**Claims**

1. A method of increasing the ratio of non-silicon to silicon atoms in the framework of a zeolite having an ion exchange capacity less than 0.7 meq/g which comprises calcining the zeolite at a temperature of 300 to 900°C, reacting the calcined zeolite at 100 to 850°C under anhydrous conditions with a volatile compound of an element, other than silicon, of Group IIIA, IIIB, IVA, IVB, VB, VIB, VIIB or VIII of the periodic table of Be, which compound has a radius ratio below 0.6 and is capable of entering the pores of the zeolite at the reaction temperature, and placing the zeolite thus reacted in the protonated form.

2. A method according to claim 1 wherein said compound has a radius ratio greater than 0.1.

3. A method according to claim 1 or claim 2 wherein the zeolite subjected to reaction contains framework Fe, B, Cr and/or Al.

4. A method according to any preceding claim wherein said volatile compound is a compound of Al, B, Co, Cr, Fe, Ga, Ta, Mn, Mo, Sn, Ti, V, W or Zr.

5. A method according to any preceding claim wherein the initial exchange capacity of the zeolite is less than 0.1 meq/g.

6. A method according to any preceding claim wherein the reacting of the calcined zeolite is effected at 100 to 500°C.

7. A method according to any preceding claim wherein the weight ratio of volatile compound to zeolite in the reacting is 0.2 to 2.

8. A method according to any preceding claim wherein the volatile compound is a halide.

9. A method according to any preceding claim wherein the volatile compound has a vapor pressure greater than 10 mm at 400°C.

10. A method according to any preceding claim wherein the volatile compound is $AlBr_3$, $AlCl_3$, $AlCl_3$, $BCl_3$, $FeCl_2$, $CrO_2Cl_2$, $TiCl_4$, $SnCl_4$ or $GaCl_3$.

11. A method according to any preceding claim wherein the reacted zeolite is placed in the protonated form by hydrolysis at 20 to 550°C.

12. A method according to any of claims 1 to 10 wherein the reacted zeolite is placed in the protonated form by ammonium exchange followed by calcination at 200 to 600°C.

13. A method according to any of claims 1 to 12 wherein the initial zeolite has a silica/alumina mole ratio greater than 100.

14. A method according to claim 13 wherein the silica/alumina ratio is greater than 500.

15. A method according to any preceding claim wherein the initial zeolite is one synthesized from a reaction mixture containing aluminum only as an impurity.

16. A method according to any of claims 1 to 15 wherein the zeolite has a constraint index in the range 1 to 12.

17. A method according to any of claims 1 to 15 wherein the zeolite is ZSM-5, -11, -12, -23, -35, -38, -48 or beta.

18. A method according to any of claims 1 to 14 wherein the initial zeolite is a dealuminized zeolite.

19. A method according to claim 18 wherein the zeolite is Y, ZSM-20 or beta.

20. A method according to any preceding claim wherein after calcination and before reaction with the volatile compound the zeolite is reacted with hydrogen fluoride.

21. Use as catalyst for the conversion of organic compounds, optionally in the form of a composite with a matrix, of zeolites obtained by the method claimed in any of claims 1 to 20.

**Patentansprüche**

1. Verfahren zur Erhöhung des Verhältnisses der Nichtsiliciumatome zu den Siliciumatomen im Gitter eines Zeoliths mit einer Ionenaustauschkapazität von kleiner als 0,7 Milliäquivalent/g, das das Calzinieren des Zeoliths bei einer Temperatur von 300 bis 900°C, die Reaktion des calzinierten Zeolithes unter wasserfreien Bedingungen bei 100 bis 850°C mit einer flüchtigen Verbindung eines von Silicium verschiedenen Elementes der Gruppe, IIIA, IIIB, IVA, IVB, VB, VIB, VIIB oder VIII des Periodensystems oder Be, wobei die Verbindung ein Radiusverhältnis unter 0,6 aufweist und in der Lage ist, bei dieser Reaktionstemperatur in die Poren des Zeoliths einzudringen, und das Überführen des so reagierten Zeoliths in die protonierte Form umfaßt.

2. Verfahren nach Anspruch 1, worin die Verbindung ein Radiusverhältnis von größer als 0,1 aufweist.

3. Verfahren nach Anspruch 1 oder 2, worin der der Reaktion unterzogene Zeolith Fe, B, Cr und/oder Al im Gitter enthält.

4. Verfahren nach einem der vorstehenden Ansprüche, worin die flüchtige Verbindung eine Verbindung von Al, B, Co, Cr, Fe, Ga, Ta, Mn, Mo, Sn, Ti, V, W oder Zr ist.

5. Verfahren nach einem der vorstehenden Ansprüche, worin die Anfangsionenaustauschkapazität des Zeoliths kleiner als 0,1 Milliäquivalent/g ist.

6. Verfahren nach einem der vorstehenden Ansprüche, worin die Reaktion des calzinierten Zeoliths bei 100 bis 500°C durchgeführt wird.

7. Verfahren nach einem der vorstehenden Ansprüche, worin das Gewichtsverhältnis der flüchtigen Verbindung zum Zeolith in dieser Reaktion 0,2 bis 2 beträgt.

8. Verfahren nach einem der vorstehenden Ansprüche, worin die flüchtige Verbindung ein Halogenid ist.

9. Verfahren nach einem der vorstehenden Ansprüche, worin die flüchtige Verbindung einen Dampfdruck von größer als 10 mm bei 400°C aufweist.

10. Verfahren nach einem der vorstehenden Ansprüche, worin die flüchtige Verbindung $AlBr_3$, $AlCl_3$, $BCl_3$, $FeCl_2$, $CrO_2Cl_2$, $TiCl_4$, $SnCl_4$ oder $GaCl_3$ ist.

11. Verfahren nach einem der vorstehenden Ansprüche, worin der reagierte Zeolith durch Hydrolyse bei 20 bis 550°C in die protonierte Form gebracht wird.

12. Verfahren nach einem der Ansprüche 1 bis 10, worin der reagierte Zeolith durch Ammoniumaustausch, gefolgt von Calzinieren bei 200 bis 600°C in die protonierte Form gebracht wird.

13. Verfahren nach einem der Ansprüche 1 bis 12, worin der Ausgangszeolith ein Siliciumdioxid/Aluminiumoxid-Molverhältnis von größer als 100 aufweist.

14. Verfahren nach Anspruch 13, worin das Siliciumdioxid/Aluminiumoxid-Verhältnis größer als 500 ist.

15. Verfahren nach einem der vorstehenden Ansprüche, worin der Ausgangszeolith ein solcher ist, der aus einer Reaktionsmischung synthetisiert wurde, die Aluminium nur als Verunreinigung enthält.

16. Verfahren nach einem der Ansprüche 1 bis 15, worin der Zeolith einen Zwangsindex im Bereich von 1 bis 12 aufweist.

17. Verfahren nach einem der Ansprüche 1 bis 15, worin der Zeolith ZSM-5, ZSM-11, ZSM-12, ZSM-23, ZSM-35, ZSM-38, ZSM-48 oder ZSM Beta ist.

18. Verfahren nach einem der Ansprüche 1 bis 14, worin der Ausgangszeolith ein dealuminisierter Zeolith ist.

19. Verfahren nach Anspruch 18, worin der Zeolith Zeolith Y, ZSM-20 oder Zeolith-Beta ist.

20. Verfahren nach einem der vorstehenden Ansprüche, worin der Zeolith nach der Calzinierung und vor der Reaktion mit der flüchtigen Verbindung mit Fluorwasserstoff reagiert.

21. Verwendung der nach einem Verfahren nach einem der Ansprüche 1 bis 20 erhaltenen Zeolithe als Katalysator zur Umwandlung organischer Verbindungen, wahlweise in Form einer Zusammensetzung mit einer Matrix.

**Revendications**

1. Une méthode d'accroissement du rapport des atomes non silicium/silicium dans la structure d'une zéolite, présentant une capacité d'échange ionique inférieure à 0,7 méq/g, qui comprend la calcination de la zéolite à une température comprise entre 300 et 900°C, la réaction de la zéolite calcinée à 100 à 85°C dans des conditions anhydres avec un composé volatil d'un élément autre que le silicium du groupe IIIA, IIIB, IVA, IVB, VB, VIB, VIIB ou VIII de la Classification Périodique, ou béryllium, lequel composé présente un rapport des rayons inférieur à 0,6 et est capable de pénétrer dans les pores de la zéolite à la température de la réaction et de mettre la zéolite, ayant ainsi réagi, sous la forme protonée.

2. Une méthode selon la revendication 1, dans laquelle ledit composé présente un rapport des rayons supérieur à 0,1.

3. Une méthode selon la revendication 1 ou la revendication 2, dans laquelle la zéolite soumise à la réaction contient, dans sa structure, Fe, B, Cr et/ou Al.

4. Une méthode selon l'une quelconque des revendications précédentes, dans laquelle ledit composé volatil est un composé d'Al, B, Co, Cr, Fe, Ga, Ta, Mn, Mo, Sn, Ti, V, W ou Zr.

5. Une méthode selon l'une quelconque des revendications précédentes, dans laquelle la capacité d'échange ionique de la zéolite est inférieure à 0,1 méq/g.

6. Une méthode selon l'une quelconque des revendications précédentes, dans laquelle on fait réagir à 100°C jusqu'à 500°C la zéolite calcinée.

7. Une méthode selon l'une quelconque des revendications précédentes, dans laquelle le rapport pondéral du composé volatil à la zéolite dans la réaction est de 0,2 à 2.

8. Une méthode selon l'une quelconque des revendications précédentes, dans laquelle le composé volatil est un halogénure.

9. Une méthode selon l'une quelconque des revendications précédentes, dans laquelle le composé volatil a une pression de vapeur supérieure à 10 mm à 400°C.

10. Une méthode selon l'une quelconque des revendications précédentes, dans laquelle ledit composé volatil est $AlBr_3$, $AlCl_3$, $BCl_3$, $FeCl_2$, $CrO_2Cl_2$, $TiCl_4$, $SnCl_4$ ou $GaCl_3$.

11. Une méthode selon l'une quelconque des revendications précédentes, dans laquelle la zéolite mise en réaction est mise sous forme protonée par hydrolyse du 20°C jusqu'à 550°C.

12. Une méthode selon l'une quelconque des revendications 1 à 10, dans laquelle la zéolite mise en réaction est mise sous forme protonée par mélange avec des ions ammonium suivie d'une calcination à 200° jusqu'à 600°C.

13. Une méthode selon l'une quelconque des revendications 1 à 12, dans laquelle la zéolite initiale présente un rapport silice/alumine supérieur à 100.

14. Une méthode selon la revendication 13, dans laquelle le rapport silice/alumine est supérieur à 500.

15. Une méthode selon l'une quelconque des revendications précédentes, dans laquelle la zéolite est

une zéolite synthétisée à partir d'un mélange réactionnel contenant de l'aluminum seulement comme impureté.

16. Une méthode selon l'une quelconque des revendications 1 à 15, dans laquelle la zéolite présente un indice de contrainte compris entre 1 et 12.

17. Une méthode selon l'une quelconque des revendications 1 à 15, dans laquelle la zéolite est ZSM-5, ZSM-11, ZSM-12, ZSM-23, ZSM-35, ZSM-38, ZSM-48 ou béta.

18. Une méthode selon l'une quelconque des revendications 1 à 14, dans laquelle la zéolite initiale est désaluminisée.

19. Une méthode selon la revendication 18, dans laquelle la zéolite est Y, ZSM-20 ou béta.

20. Une méthode selon l'une quelconque des revendications précédentes, dans laquelle, après calcination et avant réaction avec le composé volatil, la zéolite est mise en réaction avec l'acide fluorhydrique.

21. Utilisation comme catalyseurs dans la conversion de composés organiques, éventuellement sous la forme d'une association avec une matrice, des zéolites obtenues par la méthode revendiquée dans l'une quelconque des revendications 1 à 20.